# EUROPEAN PATENT APPLICATION

(11) **EP 0 971 209 A1**
(43) Date of publication of application: **12.01.2000**
(21) Application number: 98961532.3
(22) Date of filing: 24.12.1998
(51) Int. Cl.: G01D 11/24, G01D 13/02, B60K 35/00

(54) **INSTRUMENT DEVICE**

(30) Priority: 26.12.1997 JP 35865797
(71) Applicant: NIPPON SEIKI CO., LTD., Nagaoka-shi, Niigata 940-8580 (JP)
(72) Inventor: KOBAYASHI, Toyokazu, Nippon Seiki Co., Ltd., Nagaoka-shi, Niigata 940-8580 (JP); MIYAJIMA, Makoto, Nippon Seiki Co., Ltd., Nagaoka-shi, Niigata 940-8580 (JP)
(74) Representative: Jackson, Richard Eric
(86) International application number: JP9805875
(87) International publication number: WO9934172

(57) **Abstract**

There is provided an instrument device capable of restraining positional shift of supporting members relative to instrument main bodies, in which instrument main bodies 11 are fixed on a circuit board 1, a case 3 having a bottom plate portion 31 for inserting pointer shafts 111 is arranged on a front side of the circuit board 1 including the instrument main bodies 11, instrument dials 5 having design portions 52 in correspondence with pointers 6 are arranged on an opening side of the case 3, the instrument dials 5 are supported via supporting members 4 arranged on a front side of the circuit board 1 by interposing the case 3, the supporting members 4 are formed with extended portions 45 extended to the side of the circuit board 1 by penetrating penetrated portions 32 of a bottom plate portion 31 of the case 5 and fitting portions 14 fitted to fitting projections 44 of the extended portions 45 for positioning the supporting members 4 relative to the circuit board 1 are formed at positions of the circuit board 1 in correspondence with the extended portions 45.

## Description

### TECHNICAL FIELD

The present invention relates to an instrument device mounted in, for example, an automobile for displaying a travelling speed or engine revolutions, particularly to a combination meter unitizing a plurality of kinds of instruments.

### BACKGROUND OF THE INVENTION

There are known conventional examples of combination meters of this kind disclosed in, for example, JP-A-8-230516, JP-A-8-178703 and JP-A-8-164770.

According to these respective publications, a combination meter is constituted by containing various kinds of instrument units comprising a speedometer, an engine tachometer and the like in a case the front side of which is opened, covering an opening side of the case containing these various kinds of instrument units by a cover member for decoration referred to as an endleaf plate, exposing design portions of the various kinds of instrument units from opening portions in a shape of an opening hole formed at the cover member and covering further a front side thereof by a transparent front cover.

As shown by, for example, JP-A-8-313294, each of instrument units is constituted by an exclusive circuit board, an instrument main body arranged on the circuit board, an instrument dial arranged on the front side of the instrument main body, a supporting member comprising a light guiding plate for supporting the instrument dial from the rear side and a pointer connected to a pointer shaft of the instrument main body via shaft holes formed at both of the supporting member and the instrument dial and is constituted such that as is well known, the instrument dial is formed with a design portion in accordance with the pointer pivoting around the shaft, by pivoting the pointer on the design portion, a measured amount can be read, further, a light source is arranged above the circuit board and light of the light source is guided to the pointer and the instrument dial by the supporting member which is the light guiding plate by which the pointer and the instrument dial can be illuminated from the rear side.

Further, for example, the instrument dial is fixedly screwed to the instrument main body along with the supporting member, or the instrument dial is fixedly pasted to the supporting member fixedly screwed to the instrument main body via an adhesive double coated tape by which the instrument dial is fixedly positioned relative to both of the supporting member and the instrument main body and the center of each shaft hole and the center of each pointer shaft are aligned with each other. Further, with a purpose of preventing an instrument dial from floating up from a supporting member at a peripheral edge portion of a shaft hole or preventing leakage of light from a vicinity of the shaft hole or the like, it is known that, for example, as disclosed in JP-A-9-105650, a shaft hole of an instrument dial is fitted to a projected portion formed to project at a peripheral edge of a shaft hole of a supporting member, or, as disclosed in JP-B-5-28491U, both of an instrument dial and a supporting member (light guiding plate) are fixed by fastening members in a ring-like shape at a peripheral edge portion of a shaft hole.

In this way, respective instrument units each sub-unitized into a circuit board, an instrument main body, a supporting member and an instrument dial, are contained in a case such that these instrument dials are directed to the front side, conductively connected to a flexible printed circuit (FPC) as a main circuit board arranged to be drawn to the rear side of the case, a cover member is arranged on the front side of each of the instrument units integrated via the case, further, a transparent perspective cover is arranged on the front side.

Meanwhile, according to an instrument device (combination meter) of this kind, as disclosed in, for example, JP-A-9-21655, without adopting a structure in which respectives of circuit boards, supporting members, instrument dials are mounted to instrument main bodies and previously sub-unitized and instrument units sub-unitized in this way are integrated to a case, there is provided a structure in which an instrument main body is directly connected to a circuit board, (in a combination meter, an individual instrument main body is directly connected to a main circuit board) and respective members comprising a case, a supporting member (light guiding member), an instrument dial and a cover member are arranged on the front side in a laminated state.

However, according to such an instrument device (combination meter) having the laminated structure, a position of the supporting member relative to the instrument main body is determined via the circuit board and the case and accordingly, positional shift between an axis center of a pointer shaft and a center of a shaft hole of the supporting member is liable to cause, in the case in which the supporting member comprises a light guiding member, positions of a light supplying portion for supplying light to a pointer and a light receiving portion of the pointer may be shifted from each other, adverse influence may be effected on illumination of the pointer, further, in the case in which the supporting member is provided with a pointer stopper for rectifying a pivot range of the pointer by bringing the pointer stopper in contact with a portion of a rotational center portion of the pointer at a shaft hole or at a position at a vicinity thereof, a pivot rectifying range of the pointer may be shifted relative to a design portion on the instrument dial or the pivot rectifying range by the stopper may not stay constant and there remains a room for improvement in this respect.

Further, according to such an instrument device (combination meter), as disclosed in JP-A-9-105650 or JP-B-5-28491U, when positioning of the instrument dial and the supporting member is carried out, the position of the instrument dial follows the supporting member and accordingly, a design portion of the instrument dial is liable to positionally shift relative to an opening portion of a cover member and there remains a room for improvement also in this respect.

Further, according to an instrument device (combination meter) having such a structure, the position of the instrument dial relative to the instrument main body is determined via a circuit board, a case and the supporting member and accordingly, an axis center of a pointer shaft of the instrument main body and the center of the design portion of the instrument dial are liable to positionally shift from each other and there remains a room for improvement also in this respect.

The invention has been carried out in view of these respects, among principal objects thereof, a first object thereof is to provide an instrument device capable of restraining positional shift of a supporting member relative to an instrument main body, a second object thereof is to provide an instrument device capable of restraining a positional shift between the instrument dial and a cover member and a third object thereof is to provide an instrument device capable of restraining a positional shift between an instrument dial and an instrument main body.

### DISCLOSURE OF THE INVENTION

In order to achieve the above-described object, according to an aspect of the invention, there is provided an instrument device characterized in providing a circuit board, an instrument main body fixed on a front side of the circuit board for driving to pivot a pointer by a pointer shaft, an instrument dial arranged on the front side of the circuit board including the instrument main body and having design portions at least in correspondence with the pointer and a supporting member for supporting the instrument dial from a rear side, wherein the supporting member is formed with extended portions extended to a side of the circuit board and positioned relative to the circuit board. By positioning the supporting member relative to the instrument main body by the extended portions via the circuit board, positional shift of the supporting member relative to the instrument main body is restrained.

Further, in order to achieve the above-described object, according to another aspect of the invention, there is provided an instrument device characterized in providing a circuit board, an instrument main body fixed on a front side of the circuit board for driving to pivot a pointer by a pointer shaft, an instrument dial arranged on the front side of the circuit board including the instrument main body and having design portions at least in correspondence with the pointer, a supporting member for supporting the instrument dial from a rear side and a cover member arranged on a front side of the instrument dial and formed with opening portions for exposing the design portions including the pointer, wherein the supporting member is installed with supporting means for movably supporting the instrument dial and the cover member is installed with projected portions for positioning the instrument dial. By making the instrument dial movable relative to the supporting member via the supporting means and positioning the instrument dial relative to the cover member via the projected portions, positional shift of the instrument dial relative to the cover member is restrained. Such a constitution is preferable in an instrument device of a type in which importance is mostly attached to an accuracy in a positional relationship of the instrument dial relative to the cover member.

Further, in order to achieve the above-described object, according to another aspect of the invention, there is provided an instrument device characterized in providing a circuit board, an instrument main body fixed on a front side of the circuit board for driving to pivot a pointer by a pointer shaft, an instrument dial arranged on the front side of the circuit board including the instrument main body and having design portions at least in correspondence with the pointer, supporting member for supporting the instrument dial from a rear side and a cover member arranged on a front side of the instrument dial and formed with opening portions for exposing the design portions including the pointer, wherein the supporting member is installed with extended portions extended to a side of the circuit board and positioned relative to the circuit board and supporting means for movably supporting the instrument dial and the cover member includes projected portions for positioning the instrument dial. By positioning the supporting member relative to the instrument main body by the extended portions via the circuit board in this way, making the instrument dial movable relative to the supporting member and positioning the instrument dial relative to the cover member via the projected portions, a positional shift of the supporting member relative to the instrument main body and a positional shift of the instrument dial relative to the cover member are restrained. Such a constitution is also preferable to an instrumental device of a type in which importance is mostly attached to an accuracy in a positional relationship of the instrument dial relative to the cover member.

Further, according to another aspect of the invention, there is provided an instrument device characterized in that the instrument dial and the supporting member include shaft holes in correspondence with the pointer shaft, further comprising fastening members for overlapping both of the instrument dial and the supporting member in a laminating direction at peripheral edge portions of the shaft holes and the instrument dial is constituted movable in a plate face direction in a state of mounting the fastening members. By making the instrument dial movable in the plate face direction in the state of mounting the fastening members in this way, while restraining the instrument dial from floating up from the supporting member, a positional shift of the instrument dial relative to opening portions of the cover member is restrained.

Further, according to the instrument device of the invention, by adopting the instrument main body particularly comprising a stepping motor, even when owing to the fact that the instrument dial is installed movably relative to the supporting member, the instrument dial and the instrument main body are positionally shifted from each other by which an error is produced in an indicating characteristic of the pointer, since the indicating characteristic of the stepping motor in respect of an input signal is in a straight line (linear), correction of the indication error is facilitated.

Further, in order to achieve the above-described object, according to another aspect of the invention, there is provided an instrument device characterized in providing a circuit board, an instrument main body fixed on a front side of the circuit board for driving to pivot a pointer by a pointer shaft, an instrument dial arranged on the front side of the circuit board including the instrument main body and having design portions at least in correspondence with the pointer and a supporting member for supporting the instrument dial from a rear side, wherein the supporting member is installed with extended portions extended to a side of the circuit board and positioned relative to the circuit board and positioning portions for positioning the instrument dial. By positioning the supporting member relative to the instrument main body by the extended portions via the circuit board and positioning the instrument dial relative to the supporting member positioned relative to the instrument main body via the circuit board in this way, a positional shift of the supporting member as well as the instrument dial relative to the instrument main body is restrained. Such a constitution is preferable in an instrument device of a type in which importance is mostly attached to an accuracy in a positional relationship of the instrument dial relative to the instrument main body.

Further, in order to achieve the above-described object, according to another aspect of the invention, there is provided an instrument device characterized in providing a circuit board, an instrument main body fixed on a front side of the circuit board for driving to pivot a pointer by a pointer shaft, an instrument dial arranged on the front side of the circuit board including the instrument main body and having design portions at least in correspondence with the pointer, a supporting member for supporting the instrument dial from a rear side and a cover member arranged on a front side of the instrument dial and formed with opening portions for exposing the design portions including the pointer, wherein the supporting member is installed with extended portions extended to a side of the circuit board and positioned relative to the circuit board, first positioning portions for positioning the instrument dial and second positioning portions for positioning the cover member.

By positioning the supporting member relative to the instrument main body by the extended portions via the circuit board, positioning the instrument dial relative to the supporting member via the first positioning portions and positioning the cover member relative to the supporting member via the second positioning portions in this way, with the supporting member positioned relative to the instrument main body via the circuit board as a reference, positions of the instrument dial and the cover member can be determined by which a positional shift of the supporting member as well as the instrument dial relative to the instrument main body and a positional shift of the instrument dial relative to the cover member are restrained. Such a constitution is preferable in the case in which importance is attached to both of an accuracy in a positional relationship of the instrument dial relative to the instrument main body and an accuracy in a positional relationship of the instrument dials relative to the cover member.

Further, the instrument device according to the invention is particularly useful in a combination meter in which a plurality of the instrument main bodies are fixed on the circuit board.

Further, according to the instrument device of the invention, particularly, the supporting member comprises a light guiding member for guiding light to at least either of the pointer and the instrument dial and by constituting the supporting member by the light guiding member, an exclusive supporting member is dispensed with and a number of parts can be reduced.

### BRIEF DESCRIPTION OF THE DRAWINGS

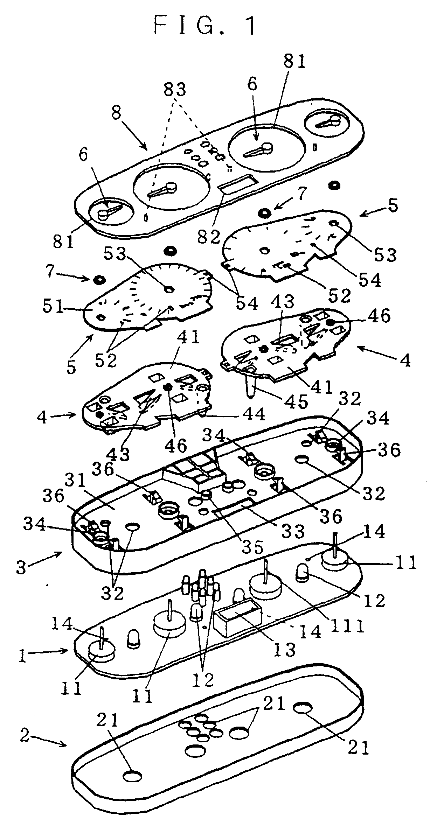

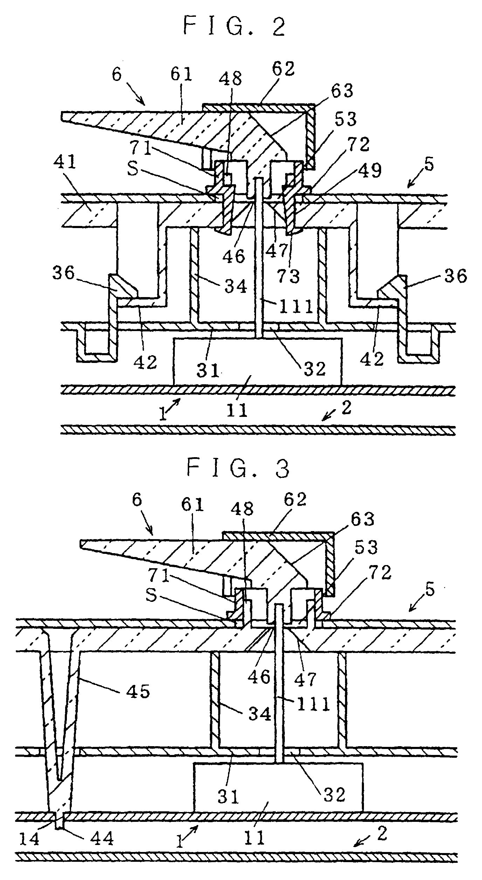

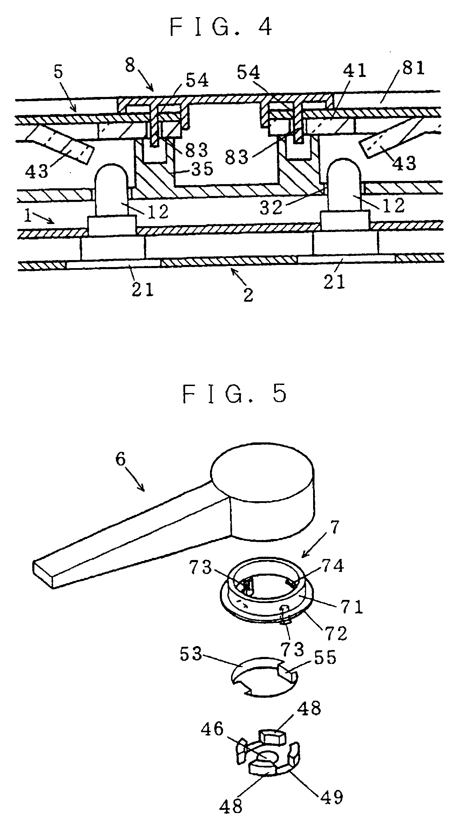

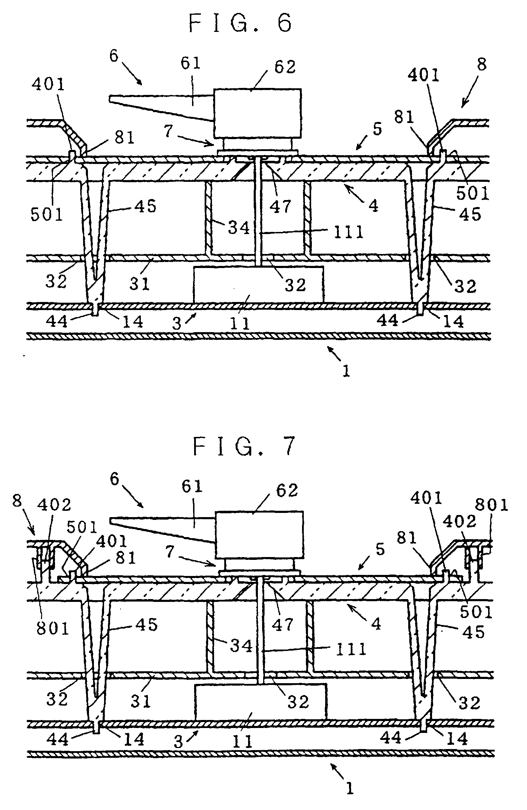

Fig. 1 is a disassembled perspective view of an instrument device showing a first embodiment in which the invention is applied to a combination meter, Fig. 2 is a sectional view showing a state of attaching a supporting member (light guiding member) in Fig. 1, Fig. 3 is a sectional view showing a state of positioning the supporting member in Fig. 1, Fig. 4 is a sectional view showing a state of positioning an instrument dial in Fig. 1, Fig. 5 is a disassembled perspective view of essential portions at a vicinity of a pointer in Fig. 1, Fig. 6 is a sectional view of essential portions of an instrument device showing a second embodiment in which the invention is applied to a combination meter and Fig. 7 is a sectional view of essential portions of an instrument device showing a third embodiment in which the invention is applied to a combination member.

### BEST MODE FOR CARRYING OUT THE INVENTION

In Fig. 1, an instrument device comprising a combination meter according to the embodiment is constituted by a circuit board 1, a cover 2 opened to a front side containing the circuit board 1, a case 3 arranged on the front side of the circuit board 1, a pair of supporting members 4 contained in the case 3 and arranged on the front side of the circuit board 1 by interposing the case 3, instrument dials 5 arranged on the front side of the supporting members 4, pointers 6 fixed to pointer shafts, mentioned later, and inserted through shaft holes formed in the case 3, the supporting members 4 and the instrument dials 5, fastening members 7 mounted at surroundings of the shaft holes of the supporting members 4 and the instrument dials 5 and a cover member 8 exposing predetermined portions of the instrument dials 5 including the pointers 6.

The circuit board 1 comprises a hard monolithic board, a front side thereof is mounted with a plurality (four) of instrument main bodies 11, similarly, a plurality of illumination bulbs 12 and a liquid crystal display device 13 for displaying various information starting from a travelling distance, further, pertinent portions thereof are formed with a plurality of fitting portions 14 for positioning the supporting members 4 and respectives of the instrument main bodies 11, the illumination bulbs 12 and the liquid crystal display device 13 are conductively fixed to circuit patterns, not illustrated, by pertinent means of soldering or the like. Further, the circuit patterns are conductively fixed also with circuit elements of drive circuits and the like for driving the respectives of the instrument main bodies 11, the illumination bulbs 12 and the liquid crystal display device 13 other than these.

Each of the instrument main body 11 comprises a two phase permanent magnet type stepping motor driving a permanent magnet rotor by a stator constituted by laminating two of stator cores overlapping a pair of comb teeth yokes on a coil bobbin in the axial direction (incidentally, in respect of a detailed constitution of the instrument main body of the stepping motor type, refer to, for example, JP-A-9-191628), is arranged in a state in which a pointer shaft 111 connected with the pointer 6 is projected to the front side and is used as a main body of a speedometer, a main body of an engine tachometer, a main body of a fuel gauge or a main body of a water temperature meter. Further, the instrument main body 11 is fixedly positioned by inserting a terminal, not illustrated, extended to the side of the circuit board 1 and soldering it on the rear face side relative to the circuit board 1. An advantage of fixedly soldering the instrument main body 11 to the circuit board 1 in this way, resides in an attachment structure in which in soldering circuit parts the illustration of which is omitted to the circuit board 1, the respective instrument main bodies 11 can fixedly be soldered along therewith and attaching operation via fastening pieces of screws or the like or attaching operation via separately prepared exclusive terminals is dispensed with and which is extremely simple and requires less time and labor.

The cover 2 is made of white synthetic resin for covering the rear side of the circuit board 1 and portions thereof in correspondence with the illumination bulbs 12 are formed with hole portions 21 enabling attachment and detachment of the illumination bulbs 12 from outside.

The case 3 is provided with a structure having a section substantially in a "H" type opened to the front side and the rear side with a bottom plate portion 31 as a reference and the bottom plate portion 31 is provided with penetrated portions 32 and an opening hole portion 33 for inserting or exposing respectives of the pointer shafts 111 of the instrument main bodies 11, the engaging portions 14, the illumination bulbs 12 and the liquid crystal display device 13, receiving portions 34 in a ring-like shape and mounting portions 35 in a shape of a circular cylinder which are projected to the front side to support the supporting members 4 on the rear side when the supporting members 4 are contained and elastic hook portions 36 formed at surroundings of the receiving portions 34 for engaging with the supporting members 4 and fixing them to the bottom plate portion 31. Further, other than functioning as such a frame member, in the case of the embodiment, the case 3 is formed to be capable of reflecting light by the white synthetic resin and the front portion of the section substantially in the "H" type, that is, the front portion of the bottom plate portion 31 functions also as a reflecting member for restraining loss of light of the illumination bulbs 12 internally reflected at the portion and efficiently reflecting light to the side of the instrument dial 5. Further, the rear portion of the section substantially in the "H" type is provided with a function of containing the circuit board 1 between the portion and the cover 2.

The supporting members 4 comprise a pair of light guiding members formed by a transparent synthetic resin material of acrylic resin, polycarbonate resin or the like, each of them is provided with a supporting portion (supporting means) 41 in a flat plate shape supporting the instrument dial 5 from the rear side, is installed with a plurality of engagement stepped portions 42 formed continuously from the supporting portion 41 for engaging with the hook portions 36 of the case 3 (refer to Fig. 2), a plurality of light introducing portions 43 extended to the rear side to introduce light from the illumination bulbs 12 inserted through the penetrated portions 32 of the case 3, a plurality of extended portions 45 each extended to the rear side by penetrating the penetrated portion 32 of the case 3, installed with a fitting projection 44 for fitting to the fitting portion 14 of the circuit board 1 at a front end side thereof and formed with a hollow conical column shape at an inner portion thereof and shaft holes 46 in correspondence with the pointer shafts 111 inserted to the front side through the penetrated portions 32 of the case 3.

Further, as shown by Fig. 2, Fig. 3 and Fig. 5, the surrounding of the shaft hole 46 is installed with a reflecting portion 47 for reflecting light from the illumination bulb 12 introduced into the supporting member 4 via the light introducing portion 43 to the side of the pointer 6, a plurality of projected wall portions 48 extended from a side opposed to the reflecting portion 47 to the side of the pointer 6 and arranged in a ring-like shape and hole portions 49 formed among predetermined ones of the projected wall portions 48 contiguous to each other.

Each of the instrument dials 5 comprises a so-to-speak light transmitting dial having design portions 52 formed to be able to transmit light except a matrix portion 51, is installed with shaft holes 53 at positions in correspondence with the shaft holes 46 of the supporting member 4 and is provided with engaging portions 54 in a shape of a through hole at positions in correspondence with projected portions of the cover member 8, mentioned later.

In this case, the design portions 52 are arranged in a ring-like shape along a pivoting track of the pointer 6 and forms a design pattern in accordance with a kind of the instrument main body 11 used as a main body of a speedometer, a main body of an engine tachometer, a main body of a fuel gauge or a main body of a water temperature meter and these design portions 52 are illuminated by transmitting light of the illumination bulbs 12 introduced into the supporting portion 41 of the supporting member 4 therethrough.

Further, as shown by Fig. 2, Fig. 3 and Fig. 5, the shaft hole 53 is formed such that a diameter thereof is larger than an outer diameter of arranging the projected wall portions 48 of the supporting member 4 and on an inner side thereof, there are formed projected pieces 55 projected among the projected wall portions 48 when the instrument dial 5 is supported by (mounted at) the front side of the supporting member 4 and the shaft hole 53 is penetrated by the projected wall portions 48.

The pointer 6 comprises a transparent synthetic resin material of acrylic resin, polycarbonate resin or the like, a pivoting center portion thereof is constituted by an indicating portion 61 fixed to the pointer shaft 111 and a light shielding pointer cover 62 covering the pivoting center portion of the supporting portion 61 and at the pivoting center portion of the supporting portion 61, there is formed a pointer reflecting portion 63 in correspondence with the reflecting portion 47 of the supporting member 4 for reflecting light reflected from the portion to a front end side (refer to Fig. 2, Fig. 3).

As shown by Fig. 5 in details, the fastening member 7 comprises a light shielding portion 71 in a circular cylinder shape, a flange portion 72 projected to the surrounding on the rear side of the light shielding portion 71, a pair of fixing hooks 73 extended from the flange portion 72 to the rear side and a pressing piece 74 projected from the inner periphery of the flange portion 72 toward an inner portion thereof, an outer diameter of the light shielding portion 71 is formed to be smaller than an inner diameter of the pointer cover 62 and to overlap the pointer cover 62, further, the flange portion 72 is provided with an outer diameter smaller than an outer diameter of the pointer cover 62 and larger than the shaft hole 53 of the instrument dial 5, further, the fixing hooks 73 penetrate the shaft hole 53 and the hole portions 49 in correspondence with the position of the hole portions 49 of the supporting member 4 and the peripheral edge portion of the shaft hole 53 and the projected pieces 55 of the instrument dial 5 can be pinched between the flange portion 72 and the pressing piece 74.

The cover member 8 is a so-to-speak endleaf plate comprising a light shielding synthetic resin material and is installed with opening portions 81 in a ring-like shape for exposing at least the design portions 52 including the pointers 6 at portions in correspondence with the design portions 52 of the instrument dial 5, an opening hole 82 in a rectangular shape for exposing the liquid crystal display device 13 at a portion in correspondence therewith and a plurality of projected portions 83 extended from the rear side to the side of the instrument dial 5 for engaging with the engaging portions 54.

Next, an explanation will be given of assembling of the instrument device according to the embodiment.

First, the circuit board 1 is laminated on the front side of the cover 2 and the circuit board 1 is positioned relative to the cover 2 by a positioning portion, not illustrated.

Next, the case 3 is laminated on the front side of the circuit board 1 and the case 3 and the cover 2 are fixed together by a hook the illustration of which is omitted. At this occasion, respectives of the pointer shafts 111 of the instrument main bodies 11, the illumination bulbs 12 and the liquid crystal display device 13 on the circuit board 1 are inserted to the front side of the bottom plate portion 31 of the case 3 via the penetrated portions 32 or the opening hole portion 33.

Next, the supporting members 4 are arranged to laminate on the receiving portions 34 and the mounting portions 35 from the opening side of the case 3. At this occasion, the extended portions 45 of the supporting members 4 penetrate the penetrated portions 32 of the case 3 and the fitting projections 44 are fitted to the fitting portions 14 of the circuit board 1 to thereby position the supporting members 4 relative to the circuit board 1 (refer to Fig. 3) and simultaneously therewith, the hook portions 36 of the case 3 are engaged with the engaging stepped portions 42 of the supporting members 4 to thereby fix the supporting members 4 to the case 3. Further, simultaneously therewith, the light introducing portions 43 of the supporting members 4 are opposed to the illumination bulbs 12 by which light can be guided into the supporting members 4 (refer to Fig. 2, Fig. 4).

Next, the instrument dials 5 are laminated on the front side of the supporting portions 41 of the supporting members 4 to thereby support the instrument dials 5 from the rear side. At this occasion, the projected wall portions 48 integrally formed with the supporting portions 41 are inserted into the shaft holes 53 of the instrument dials 5, as mentioned above, the inner diameter of the shaft hole 53 is formed to be more or less larger than the outer diameter of the projected wall portions 48, further, the projected pieces 55 of the shaft holes 53 are formed to be smaller than gaps among the projected wall portions 48 and accordingly, the supporting portions 41 can hold the instrument dials 5 in a state in which the instrument dials 5 are movable in respect of a plate face direction.

Next, the cover member 8 is laminated on the instrument dials 5 (opening side of the case 3) and fixedly positioned relative to the case 3. At this occasion, the design portions 52 of the instrument dials 5 are exposed on the front side via the opening portions 81, simultaneously therewith, the projected portion 83 are engaged (fitted) to the engaging portions 54 on the side of the instrument dials 5 and the instrument dials 5 supported above the supporting members 4 in the movable state are positioned relative to the cover member 8 (refer to Fig. 4). Further, although the projected portions 83 reach insides of the mounting portions 35 of the case 3 by penetrating the supporting members 4 in the state shown by Fig. 4, the inner diameter of portions of the supporting members 4 penetrated by the projected portions 83 is formed to be larger than the outer diameter of the projected portions 83 and both of the instrument dials 5 and the supporting members 4 are constituted not to position relative to the cover member 8.

Next, the fixing hooks 73 of the fastening members 7 are inserted into and engaged with the hole portions 49 of the supporting members 4 via the shaft holes 53 of the instrument dials 5 by which the fastening members 7 are fixed. At this occasion, the light shielding portions 71 of the fastening members 7 are projected to the front side along the projected wall portions 48, further, the press piece 74 is extended toward the center side between the projected wall portions 48, further, the peripheral edge portions of the shaft holes 53 of the instrument dials 5 and the peripheral edge portions of the shaft holes 46 of the supporting members 4 are held to be brought into press contact with each other among the press piece 74, the flange portions 72 and front end portions of the hook portion 73 of the fastening members 7 by which the instrument dials 5 are restrained from floating up (refer to Fig. 2, Fig. 3). Further, in the case of the embodiment, the fastening members 7 are constituted such that although the fastening members 7 restrain movements of the instrument dials 5 and the supporting members 4 relative to each other in the laminating direction, the fastening members 7 do not restrain movements of these in the plate face direction, and even when the fastening members 7 are mounted, there are formed predetermined gaps S between the shaft holes 53 of the instrument dials 5 and the projected wall portions 48 of the supporting members 4 (refer to Fig. 2, Fig. 3). By such a constitution, the fastening members 7 cannot rectify solidly positions of the instrument dials 5 in the plate face direction and accordingly, even when the fastening members 7 are fixed, the positions of the instrument dials 5 in the plate face direction are determined finally by the cover member 8 by which no positional shaft is produced between the design portions 52 of the instrument dials 5 and the opening portions 81 of the cover member 8.

Next, the penetrated portions 32 of the case 3, the pointers 6 are fixed to the pointer shafts 111 projected to the front side via the respective shaft holes 46 and 54 of the supporting members 4 and the instrument dials 5 by which the assembling operation is finished. At this occasion, the pointer reflecting portions 63 of the pointers 6 are opposed to the reflecting portions 47 of the supporting members 4 by which light is introduced from the illumination bulbs 12 into the indicating portions 61 of the pointers 6 via the reflecting portions 47 and the pointer reflecting portions 63 and further, the pointer covers 62 overlap the light shielding portions 71 of the fastening members 7 whereby leakage of light is restrained.

Further, although according to the embodiment, there has been shown a case in which respective elements of the supporting members 4, the instrument dials 5, the pointers 6, the fastening members 7 and the cover member 8 are integrated to the case 3 above the circuit board 1 in the laminated state in an order of the supporting members 4 → the instrument dials 5 → the cover member 8 → the fastening members 7 → the pointers 6, the order of integrating the respective elements is arbitrary so far as the respective elements are arranged to laminate in a regular state in respect of a state thereof after assembling and, for example, the respective elements of the supporting members 4, the instrument dials 5, the fastening members 7 and the pointers 6 may previously be assembled into sub-units via separate steps or the like and constituents sub-unitized in this way may be laminated and assembled to the case 3 above the circuit board 1.

According to the indicating instrument constituted in this way, it is constituted that the supporting members 4 are positioned relative to the instrument main bodies 11 via the circuit board 1, the instrument dials 5 are positioned relative to the cover member 8, respectively, and the cover member 8 and the circuit board 1 are not positioned directly relative to each other and accordingly, there is a case in which centers of the shaft holes 53 of the instrument dials 5 following the cover member 8 and centers of the shaft holes 46 of the supporting members 4 following the circuit board 1 (instrument main bodies 11) may be more or less shifted from each other, in the worst case, a deviation is produced in an indicating characteristic of the pointers 6 relative to the design portions 52.

However, even when the deviation is produced in the indicating characteristic of the pointer 6 relative to the design portions 52, the stepping motor is used as the instrument main body 11 and accordingly, there is provided an advantage in which the deviation in the indicating characteristic can be corrected comparatively easily by software processing.

That is, a stepping motor is of a system in which a rotor is driven by inducing magnetic force via a comb teeth type yoke having a plurality of electrode teeth at a surrounding of the rotor and therefore, a pivot angle (output angle) characteristic of the pointer 6 in respect of an input signal is linear (straight line) and therefore, in the case of the stepping motor controlled by a microcomputer, by software processing of making a simple modification in a control program or the like, a deviation in the indicating characteristic relative to the design portions 52 can simply be corrected and the correction is facilitated.

In contrast thereto, according to an instrument of a cross coil (air core) type which has conventionally been used generally, the instrument is of a system in which a rotor is driven by balancing magnetic forces of coils wound in directions orthogonal to each other and therefore, there is produced a waviness in a pivot angle characteristic in respect of an input signal and correction of the indicating characteristic is difficult.

As described above, according to the instrument device of the embodiment, the instrument main bodies 11 are fixed on the circuit board 1, the case 3 having the bottom plate portion 31 for inserting the pointer shafts 111 is arranged on the front side of the circuit board 1 including the instrument main bodies 11, the supporting members 4 comprising light guiding members are arranged above the bottom plate portion 31 of the case 3 and on the front side of the circuit board 1 interposing the case 3, the instrument dials 5 having the design portions 52 in correspondence with the pointers 6 are arranged above the supporting members 4, the supporting members 4 are formed with the extended portions 45 extended to the side of the circuit board 1 by penetrating the penetrated portions 32 of the bottom plate portion 31 of the case 5, at positions of the circuit board 1 in correspondence with the extended portions 45, there are formed the fitting portions 14 for positioning the supporting members 4 relative to the circuit board 1 by being engaged with the engaging projections 44 of the extended portions 45, by which even in the instrument device of the laminating and integrating system in which the instrument main bodies 11 and the supporting members 4 are not sub-unitized, positional shift of the supporting members 4 relative to the instrument main bodies 11 can be restrained whereby positional shift between axis centers of the pointer shafts 111 of the instrument main bodies 11 and centers of the shaft holes 46 of the supporting members 4 is restrained, when the supporting members 4 comprise light guiding members as in the embodiment, there can be prevented adverse influence on pointer illumination caused by positional shift between the reflecting portions 47 supplying light to the pointers 11 and the pointer reflecting portions 63 of the pointers 6, further, when the supporting members 4 are provided with pointer stoppers (not illustrated) for rectifying pivoting ranges of the pointers 6 by being brought into contact with portions of pivoting center portions of the pointers 6 at the shaft holes 46 or at positions at vicinities thereof, variations in pivot rectifying ranges of the pointers 6 can be restrained and the commercial performance can be promoted.

Further, according to the instrument device of the embodiment, the instrument main bodies 11 are fixed on the circuit substrate 1, the case 3 having the bottom plate portion 31 for inserting the pointer shafts 111 are arranged to the front side of the circuit substrate 1 including the instrument main bodies 11, the supporting members 4 comprising light guiding members are arranged above the bottom portion of the case 3 and on the front side of the circuit board 1 by interposing the case 3, the instrument dials 5 having the design portions 52 in correspondence with the pointers 6 are arranged above the supporting members 4, the cover member 8 formed with the opening portions 81 for exposing the design portions 52 including the pointers 6 are formed on the front side of the instrument dials 5, the supporting members 4 are installed with the supporting portions (supporting means) 41 for movably supporting the instrument dials 5 and the cover member 8 is formed with the projected portions 83 for positioning the instrument dials 5 by being engaged with the engaging portions 54 of the instrument dials by which the instrument dials 5 are positioned relative not to the supporting members 4 but to the cover member 8 and therefore, positional shift between the design portions 52 of the instrument dials 5 and the opening portions 81 of the cover member 8 can be restrained whereby the commercial performance can be promoted. Further, the constitution in which the instrument dials 5 are made movable relative to the supporting members 4 and positioned relative to the cover member 8, is preferable in an instrument device of a type in which importance is attached to an accuracy in a positional relationship of the instrument dials 5 relative to the cover member 8 and as an example of an instrument device of such a type, for example, there is pointed out an instrument device in which inner edges of the opening portions 81 of the cover member 8 and arrangement of the design portions 52 in the instrument dials 5 are proximate to each other and positional shift between the design portions 52 and the opening portions 81 becomes conspicuous.

Further, although according to the embodiment, there has been shown an example of adopting both of a constitution of positioning the supporting members 4 relative to the circuit board 1 and a constitution of positioning the instrument dials 5 relative to the cover member 8, the both positioning constitutions may not be necessarily adopted simultaneously. When both of the respective positioning constitutions, mentioned above, are simultaneously adopted as in the embodiment, positional shift between the axis centers of the pointer shafts 111 of the instrument main bodies 11 and the centers of the shaft holes 46 of the supporting members 4 can be restrained and further, positional shift between the design portions 52 of the instrument dials 5 and the opening portions 81 of the cover member 8 can also be restrained by which the commercial performance can be promoted.

Further, although according to the embodiment, the supporting portions (supporting means) 41 support movably the instrument dials 5 by forming the outer diameter of arranging the projected wall portions 48 formed at the supporting portion 41 to be smaller than the inner diameter of the shaft holes 53 of the instrument dials 5, as means for movably supporting the instrument dials 5 in the plate face direction, depending on a positional relationship with the shaft holes 53, the projected wall portions 48 capable of restraining movement of the instrument dials in the plate face direction may not be formed, the front sides of the supporting portions 41 may be constituted by flat faces and the instrument dials 5 may be supported movably only by mounting the instrument dials 5 on the faces.

Further, according to the embodiment, the supporting members 4 are constituted by light guiding members for illuminating the pointers 6 and the design portions 2 by which exclusive supporting members for supporting the instrument dials 5 are dispensed with and a number of parts can be reduced. Further, although according to the embodiment, the supporting members 4 which are light guiding members are constituted to guide light to both of the pointers 6 and the design portions 52 of the instrument dials 5, light may be guided only to the pointers 6 or only to the design portions 52. Further, the supporting member 4 may be a diffusing plate which is much adopted in an instrument device using, for example, CCT (cold cathode tube) as a light source other than the light guiding member as in the embodiment.

Further, according to the embodiment, by using the stepping motor as the instrument main body 11, even when the center of the instrument dial 5 (design portion 52) and the axis center of the instrument main body 11 (pointer shaft 111) are positionally shifted from each other owing to the fact that the instrument dial 5 is installed movably relative to the supporting member 4, in the worst case, an error is produced in the indicating characteristic of the pointer 6, correction of the indication error is facilitated.

Further, according to the embodiment, the instrument dials 5 and the supporting members 4 are provided with the shaft holes 46 and 53 in correspondence with the pointer shafts 111, further, there are provided the fastening members 7 for overlapping both of the instrument dials 5 and the supporting members 4 in the laminating direction at peripheral edge portions of the shaft holes 46 and 53, at this occasion, in the state of mounting the fastening members 7, the instrument dials 5 are constituted to be movable in the plate face direction by which while restraining the instrument dials 5 from floating up from the supporting members 4, positional shift of the design portions 52 of the instrument dials 5 relative to the opening portions 81 of the cover member 8 can be restrained.

Next, an explanation will be given of a second embodiment of the invention in reference to Fig. 6.

Although an instrument device according to the embodiment is similar to the first embodiment in that the instrument device is provided with the circuit board 1, the instrument main bodies 11 fixed on the front side of the circuit board 1 for driving to pivot the pointers 6 by the pointer shafts 111, the case 3 arranged on the front side of the circuit board 1 including the instrument main bodies 11, the supporting members 4 comprising light guiding members arranged on the front side of the circuit board 1 by interposing the case 3 and the instrument dials 5 supported by the supporting portions 41 of the supporting members 4 and having the design portions 52 and the supporting members 4 are provided with the extended portions 45 extended to the side of the circuit board 1 by penetrating the case 3 to thereby position relative to the circuit board 1, the embodiment differs from the first embodiment in that the supporting members 4 are provided with positioning portions 401 for positioning the instrument dials 5 along with the extended portions 45.

That is, according to the embodiment, the positioning portions 401 in a projected shape projected to the front side of the supporting portions 41 of the supporting members 4 are formed at desired positions covered by the cover member 8 and the positioning portions 401 are inserted into positioned portions 501 in the shape of a through hole formed at positions in correspondence with the instrument dials 5 by which the instrument dials 5 are positioned relative to the supporting members 4.

In this way, the supporting members 4 are positioned relative to the instrument main bodies 11 via the circuit board 1 by the extended portions 45 and the instrument dials 5 are positioned relative to the supporting members 4 via the positioning portions 401 by which the instrument dials 5 can be positioned relative to the supporting members 4 positioned by the instrument main bodies 11, whereby positional shift of the supporting members 4 and the instrument dials 5 relative to the instrument main bodies 11 can be restrained and the commercial performance can be promoted. Further, such a constitution is preferable in an instrument device of a type in which importance is attached not to an accuracy in a positional relationship of the instrument dials 5 relative to the cover member 8 as in the above-described first embodiment but to an accuracy in a positional relationship of the instrument dials 5 relative to the instrument main bodies 11.

Next, an explanation will be given of a third embodiment of the invention in reference to Fig. 6.

Although an instrument device according to the embodiment is similar to the above-described second embodiment in that the instrument device is provided with the circuit board 1, the instrument main bodies 11 fixed on the front side of the circuit board 1 for driving to pivot the pointers 6 by the pointer shafts 111, the case 3 arranged on the front side of the circuit board 1 including the instrument main bodies 11, the supporting members 4 comprising light guiding members arranged on the front side of the circuit board 1 by interposing the case 3, the instrument dials 5 supported by the supporting portions 41 of the supporting members 4 and having the design portions 52 and the cover member 8 arranged on the front side of the instrument dials 5 and formed with the opening portions 81 for exposing the design portions 52 including the pointers 6 and the supporting members 4 are provided with the extended portions 45 extended to the side of the circuit board 1 by penetrating the case 3 and positioned relative to the circuit board 1 and the positioning portions 401 (first positioning portions) 401 for positioning the instrument dials 5, the third embodiment differs from the second embodiment in that the supporting members 4 are provided with second positioning portions 402 for positioning the cover member 8.

That is, according to the embodiment, at positions on the front sides of the supporting portions 41 of the supporting members 4 and pertinently spaced from the first positioning portions 401 covered by the cover member 8, there are formed the second positioning portions 402 in a projected shape projected to the front side and the positioning portions 402 are inserted into second positioned portions 801 in a shape of an accommodating recess formed on the rear face side of the cover member 8 by which the cover member 8 is positioned relative to the supporting members 4.

In this way, the supporting members 4 are positioned relative to the extended main bodies via the circuit board 1 by the extended portions 45, the instrument dials 5 are positioned relative to the supporting members 4 via the first positioning portions 401 and the cover member is positioned relative to the supporting members 4 via the second positioning portions 402 by which with the supporting members 4 positioned relative to the instrument main bodies 11 via the circuit board 1 as references, positions of the instrument dials 5 and the cover member 8 can be determined by which positional shift of the supporting members 4 as well as the instrument dials 5 relative to the instrument main bodies 11 and positional shift of the instrument dials 5 relative to the cover member 8 can be restrained and the commercial performance can be promoted. Further, such a constitution is preferable in the case in which importance is attached on both of an accuracy in a positional relationship of the instrument dials 5 relative to the instrument main bodies 11 and an accuracy in a positional relationship of the instrument dials 5 relative to the cover member 8.

Further, although according to the embodiment, the second positioning portions 402 are formed in a projected shape and the second positioned portions 801 are formed in a shape of an accommodating recess, the second positioning portions 402 may be formed in a shape of a through hole or a recess and the second positioned portions 801 may be formed in a projected shape inserted into the second positioning portions 402.

Further, although according to the embodiment, the first and the second respective positioning portions 401 and 402 are separately formed, as shown by dotted lines in Fig. 7, it may be constituted that the second positioned portion 801 in a shape of an accommodating recess is formed on the cover member 8 and the first positioning portions 401 may be inserted into the second positioned portion 801 and in this case, the first positioning portion 401 functions also as the second positioning portion 402.

Further, as other example, by forming the second positioned portion 801 in a projected shape inserted from the cover member 8 into the supporting member 4 and penetrating the second positioned portion 801 through or engaging it with the instrument dial 5, three of the supporting member 4, the instrument dial 5 and the cover member 8 may be positioned and in this case, the second positioned portion 801 functions also as the first positioning portion 401 for positioning the instrument dial 5 relative to the supporting member 4, further, a portion of the instrument dial 5 penetrated by or engaged with the second positioned portion 801 functions as the first positioned portion 501 and a portion of the supporting member 4 penetrated by or engaged with the second positioned portion 801 functions as the second positioning portion 402.

Further, as in the first through the third embodiments, the instrument device according to the invention is useful in a combination meter constituted by fixing a plurality of the instrument main bodies 11 onto one sheet of the circuit board 1 and laminating and arranging respective elements of the case 3, the supporting members 4, the instrument dials 5 and the cover member 8 on a front side thereof.

### INDUSTRIAL APPLICABILITY

The invention is not limited to a vehicle such as an automobile or the like but is widely applicable as an instrument device for various moving bodies starting from a ship and an airplane.

## Claims

1. An instrument device characterized in providing a circuit board, an instrument main body fixed on a front side of the circuit board for driving to pivot a pointer by a pointer shaft, an instrument dial arranged on the front side of the circuit board including the instrument main body and having design portions at least in correspondence with the pointer and a supporting member for supporting the instrument dial from a rear side, wherein the supporting member includes extended portions extended to a side of the circuit board and positioned relative to the circuit board.

2. An instrument device characterized in providing a circuit board, an instrument main body fixed on a front side of the circuit board for driving to pivot a pointer by a pointer shaft, an instrument dial arranged on the front side of the circuit board including the instrument main body and having design portions at least in correspondence with the pointer, a supporting member for supporting the instrument dial from a rear side and a cover member arranged on a front side of the instrument dial and formed with opening portions for exposing the design portions including the pointer, wherein the supporting member includes supporting means for movably supporting the instrument dial and the cover member includes projected portions for positioning the instrument dial.

3. An instrument device characterized in providing a circuit board, an instrument main body fixed on a front side of the circuit board for driving to pivot a pointer by a pointer shaft, an instrument dial arranged on the front side of the circuit board including the instrument main body and having design portions at least in correspondence with the pointer, a supporting member for supporting the instrument dial from a rear side and a cover member arranged on a front side of the instrument dial and formed with opening portions for exposing the design portions including the pointer, wherein the supporting member includes extended portions extended to a side of the circuit board and positioned relative to the circuit board and supporting means for movably supporting the instrument dial and the cover member includes projected portions for positioning the instrument dial.

4. The instrument device according to Claim 2 or Claim 3, characterized in that the instrument dial and the supporting member include shaft holes in correspondence with the pointer shaft, further comprising fastening members for overlapping both of the instrument dial and the supporting member in a laminating direction at peripheral edge portions of the shaft holes and the instrument dial is constituted movable in a plate face direction in a state of mounting the fastening members.

5. The instrument device according to any one of Claim 1 through Claim 4, characterized in that the instrument main body comprises a stepping motor.

6. An instrument device characterized in providing a circuit board, an instrument main body fixed on a front side of the circuit board for driving to pivot a pointer by a pointer shaft, an instrument dial arranged on the front side of the circuit board including the instrument main body and having design portions at least in correspondence with the pointer and a supporting member for supporting the instrument dial from a rear side, wherein the supporting member includes extended portions extended to a side of the circuit board and positioned relative to the circuit board and positioning portions for positioning the instrument dial.

7. An instrument device characterized in providing a circuit board, an instrument main body fixed on a front side of the circuit board for driving to pivot a pointer by a pointer shaft, an instrument dial arranged on the front side of the circuit board including the instrument main body and having design portions at least in correspondence with the pointer, a supporting member for supporting the instrument dial from a rear side and a cover member arranged on a front side of the instrument dial and formed with opening portions for exposing the design portions including the pointer, wherein the supporting member includes extended portions extended to a side of the circuit board and positioned relative to the circuit board, first positioning portions for positioning the instrument dial and second positioning portions for positioning the cover member.

8. The instrument device according to any one of Claim 1 through Claim 7, characterized in that a plurality of the instrument main bodies are fixed on the circuit board.

9. The instrument device according to any one of Claim 1 through Claim 8, characterized in that the supporting member comprises a light guiding member for guiding light to at least either of the pointer and the instrument dial.
